# EUROPÄISCHE PATENTANMELDUNG

(11) **EP 0 558 927 A1**
(43) Veröffentlichungstag der Anmeldung: **08.09.1993**
(21) Anmeldenummer: 93101460.9
(22) Anmeldetag: 30.01.1993
(51) Int. Cl.: G01N 21/21

(54) **Verfahren zur berührungslosen Messung des Tausalzgehaltes und Vorrichtung zur Durchführung des Verfahrens**

(30) Priorität: 25.02.1992 DE 4205629
(71) Anmelder: TZN Forschungs- und Entwicklungszentrum Unterlüss GmbH, D-29345 Unterlüss (DE)
(72) Erfinder: Stork, Torsten, W-3101 Steinhorst (DE); Laukemper, Jörg, Dr., W-3100 Celle (DE); Schaube, Walter, W-3155 Wipshausen (DE)
(74) Vertreter: Behrend, Rainer

(57) **Zusammenfassung**

Die Erfindung betrifft ein Verfahren und eine Vorrichtung zur berührungslosen Messung des Tausalzgehaltes der auf der Straßenoberfläche (2) befindlichen Wasserschicht (3) durch Reflexionsmessung elektromagnetischer Strahlung.

Um auf einfache und genaue Weise den Tausalzgehalt zu ermitteln, schlägt die Erfindung vor, Licht (60) des sichtbaren oder infraroten Spektralbereichs auf den mit der zu untersuchenden Wasserschicht (3) bedeckten Bereich der Straßenoberfläche (1) zu richten und die Intensitäten mindestens zweier von der zu untersuchenden Wasserschicht (3) reflektierter linear polarisierten Lichtanteile zu messen und diese Meßwerte zur Ermittlung des Salzgehaltes der Wasserschicht (3) heranzuziehen.

## Beschreibung

Die Erfindung betrifft ein Verfahren zur berührungslosen Messung des Tausalzgehaltes, wie es durch die Merkmale des Gattungsbegriffs des Anspruchs 1 definiert ist. Die Erfindung bezieht sich ferner auf eine Vorrichtung zur Durchführung des Verfahrens.

Zum Verhindern von Straßenglätte werden Straßenoberflächen zur Winterzeit mit Tausalz bestreut, um ein Schmelzen von Schnee- oder Eisschichten auch bei unter 0°C liegenden Temperaturen herbeizuführen. Um zu vermeiden, daß zu viel Salz gestreut wird, was sowohl eine hohe Umweltbelastung als auch einen hohen Kostenaufwand bedeutet, kommt einer genauen Messung des Tausalzgehaltes von auf Straßenoberflächen befindlichen Wasserschichten große Bedeutung zu.

Aus der DE 3829008 Al ist ein Verfahren zur Messung des Tausalzgehaltes mit Hilfe von Zentimeterwellen bekannt. Derartige Verfahren machen eine relativ aufwendige Sender- und Empfangsapparatur erforderlich. Außerdem sind die Meßergebnisse relativ großen Schwankungen unterworfen.

Aufgabe der vorliegenden Erfindung ist es daher, ein Verfahren der eingangs erwähnten Art derart weiterzuentwickeln, das es ermöglicht, den Tausalzgehalt der auf der Straßenoberfläche befindlichen Wasserschicht auf einfache Weise genau und reproduzierbar zu messen. Ferner sollen Vorrichtungen zur Durchführung des Verfahrens angegeben werden.

Diese Aufgabe wird erfindungsgemäß durch die Merkmale des kennzeichnenden Teils des Anspruchs 1 gelöst. Die Unteransprüche 2 bis 4 geben besonders vorteilhafte Ausgestaltungen der Erfindung wieder.

Vorrichtungen zur Durchführung des erfindungsgemäßen Verfahrens offenbaren die Ansprüche 5 bis 7.

Der Erfindung liegt also im wesentlichen der Gedanke zugrunde, auszunutzen, daß die Abhängigkeit der Intensität des reflektierten Lichtes von dem Tausalzgehalt je nach Polarisationsrichtung unterschiedlich ist. Aus diesen Intensitätsunterschieden läßt sich der Tausalzgehalt in der zu untersuchenden Wasserschicht absolut bestimmen.

Weitere Vorteile und Einzelheiten der Erfindung werden im folgenden anhand von Ausführungsbeispielen und mit Hilfe von Figuren erläutert. Es zeigen:
- Fig.1: eine erste Reflexionsmeßvorrichtung zur Ermittlung des Tausalzgehaltes, wobei die Empfangsvorrichtung für unterschiedlich polarisierte Lichtanteile jeweils separate Detektoren enthält;
- Fig.1a und 1b: zwei mögliche Ausführungsbeispiele der in Fig.1 mit 10 bezeichneten Strahlungsvorrichtung;
- Fig.1c: ein Ausführungsbeispiel einer Empfangsvorrichtung mit einem polarisierenden Strahlteiler;
- Fig.2: eine zweite Reflexionsmeßvorrichtung zur Ermittlung des Tausalzgehaltes, wobei die Empfangsvorrichtung nur einen Detektor mit vorgeschaltetem rotierenden Polarisationsfilter enthält; und
- Fig.3: eine Kurvendarstellung der reflektierten Lichtintensität als Funktion der Salz-Konzentration der Wasserschicht, gemessen für parallel und für senkrecht polarisiertes Licht.

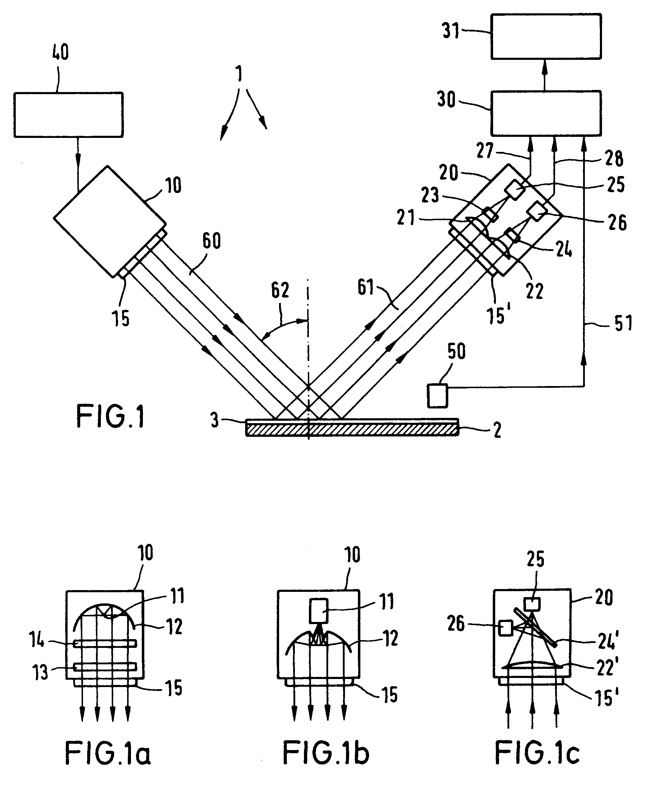

In Fig.1 ist mit 1 eine Reflexionsmeßvorrichtung, mit 2 eine Straßenoberfläche und mit 3 eine Wasserschicht, deren Tausalzgehalt gemessen werden soll, bezeichnet.

Die Reflexionsmeßvorrichtung 1 besteht im wesentlichen aus einer Strahlungsvorrichtung 10, einer Empfangsvorrichtung 20 und einer Auswerteelektronik 30, der eine Signalausgabeschnittstelle 31 nachgeschaltet sein kann. Mit der Strahlungsvorrichtung 10 ist außerdem eine Ansteuervorrichtung 40 und mit der Auswerteelektronik 30 ein Strahlungsthermometer 50 verbunden.

In Fig.1 ist ferner das von der Strahlungsquelle 10 ausgesandte Licht mit 60 und das von der Wasserschicht 3 reflektierte Licht mit 61 bezeichnet. Der Einfallswinkel des Lichtes 60 ist mit 62 gekennzeichnet und sollte größer als 300 sein, damit ein eindeutiger Unterschied in der reflektierten Lichtintensität für die beiden Polarisationrichtungen vorhanden ist.

Wie in den Fig.1a und 1b dargestellt, enthält die Strahlungsvorrichtung 10 eine Strahlungsquelle 11 und eine Optik 12 (z.B. Spiegeloptik) zur Bündelung der Strahlung. Als Strahlungsquelle 11 kann z.B. eine breitbandige Halogenlampe eingesetzt werden (Fig.1a). In diesem Fall wird ein optisches Filter 13 verwendet, um den relevanten Meßlicht-Bereich herauszufiltern. Außerdem dient ein Modulator 14 zur Amplitudenmodulation der Strahlung.

Bei Verwendung einer schmalbandigen Strahlungsquelle 11, also z.B. eines Halbleiterlasers (Fig.1b), entfällt das optische Filter. Ebenso kann auf einen optischen Modulator verzichtet werden, da die Amplitudenmodulation auch auf elektronischem Wege erfolgen kann.

Um Verunreinigungen der optischen Bauelemente zu verhindern, kann die Strahlungsvorrichtung 10 mit einem lichtdurchlässigen Fenster 15 verschlossen werden. Ist das von der Strahlungsquelle 10 emittierte Licht linear polarisiert, so ist die Polarisationsrichtung so zu wählen, daß eine senkrechte und eine parallele Polarisationskomponente (bezogen auf die Einfallsebene des Lichtes zur Oberfläche der Wasserschicht 3) vorhanden ist.

Die Empfangsvorrichtung 20 enthält ein optisches System 21, 22, welches im wesentlichen aus zwei Linsen besteht, die die Lichtstrahlung über zwei Polarisationsfilter 23,24 auf zwei Detektoren 25,26 fokussiert. Die Polarisationsachsen der beiden Polarisationsfilter 23,24 stehen vorzugsweise senkrecht aufeinander. Zur Vermeidung der Verunreinigung der optischen Bauelemente kann wiederum ein mit 15' bezeichnetes lichtdurchlässiges optisches Fenster vorgesehen werden.

Die Empfangsvorrichtung 20 kann dahingehend abgewandelt werden, daß die Trennung der beiden Polarisationsrichtungen durch einen in Fig.1c mit 24' bezeichneten Strahlteiler erfolgt. In diesem Fall besteht das mit 22' gekennzeichnete optische System nur aus einer Linse, die die Lichtstrahlung über den Strahlenteiler 24' auf die Detektoren 25,26 fokussiert. Von dem polarisierenden Strahlteiler 24' wird Licht einer bestimmten Polarisation durchgelassen und gelangt damit auf den Detektor 25; das senkrecht dazu polarisierte Licht wird vollständig vom Strahlteiler reflektiert und gelangt auf den Detektor 26.

Die von den Detektoren 25,26 erzeugten Spannungssignale werden über Signalleitungen 27,28 an die Auswerteelektronik 30 weitergeleitet. Die Auswerteelektronik 30 ist ferner mit dem Strahlungsthermometer 50, welches die Temperatur der Wasserschicht 3 berührungslos mißt, über eine Signalleitung 51 verbunden.

Im folgenden wird näher auf die Funktionsweise der Reflexionsmeßvorrichtung 1 eingegangen:
Das von der Strahlungsvorrichtung 10 erzeugte amplitudenmodulierte Licht 60 gelangt auf die Oberfläche der Wasserschicht 3, wird dort reflektiert und das reflektierte Licht 61 wird der Empfangsvorrichtung 20 zugeführt. In der Empfangsvorrichtung wird das Licht durch die Polarisationsfilter 23,24 in zwei Polarisationskomponenten zerlegt. Die eine Polarisationsrichtung sollte möglichst senkrecht, die andere möglichst parallel zur Einfallsebene des Lichtes orientiert sein.

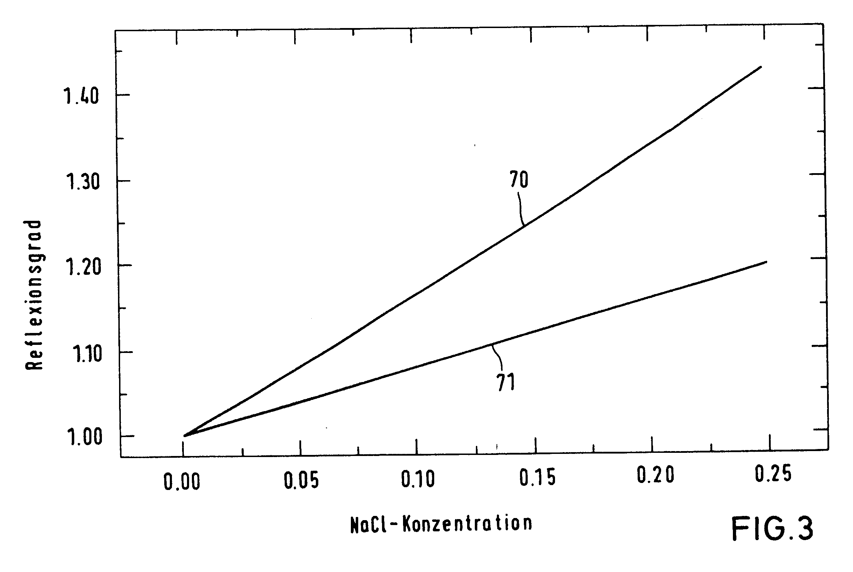

In Fig.3 ist der relative Reflexionsgrad (d.h. der auf den Reflexionsgrad von Wasser bezogene Reflexionsgrad) als Funktion der Salzkonzentration (NaCl-Konzentration) für parallel polarisiertes Licht (Kurve 70) und für senkrecht polarisiertes Licht (71) im nahen Infrarotbereich bei einem Einfallswinkel von 47° dargestellt. Die Kurven 70 und 71 in Fig.3 zeigen, daß die beiden Polarisationsrichtungen eine unterschiedliche Abhängigkeit der reflektierten Lichtintensität vom Salzgehalt aufweisen. Aus dem Verhältnis der beiden Signale der Detektoren 25,26 (Fig.1) kann direkt die Salzkonzentration bestimmt werden, ohne daß die absolute Lichtintensität des reflektierten Lichtes bekannt sein muß.

Die eigentliche Verarbeitung der gemessenen Signale erfolgt in der Auswerteelektronik 30, die einen nicht dargestellten Mikroprozessor aufweisen kann. Dieser berechnet aus den beiden Detektorsignalen die Salzkonzentration. Diese Salzkonzentrationsbestimmung kann beispielsweise dadurch erfolgen, daß bei einer Kalibrierung der Meßvorrichtung Eichkurven (Reflexionsvermögen der Wasserschicht als Funktion der Salzkonzentration) aufgenommen und in einem Speicher der Auswerteelektronik 30 abgelegt werden.

Für hochgenaue Messungen muß die Temperatur der Wasserschicht 3 berücksichtigt werden, die vorzugsweise berührungslos mit Hilfe eines Strahlungsthermometers 50 bestimmt werden kann. Die Berücksichtigung der Temperatur kann ebenfalls dadurch erfolgen, daß Eichkurven (Reflexionsvermögen der Wasserschicht als Funktion der Salzkonzentration) für verschiedene Temperaturen aufgenommen und in einen Speicher der Auswerteelektronik 30 abgelegt werden. Bei Berechnung der Salzkonzentration für eine Temperatur, die nicht in dem Speicher zur Verfügung steht, erfolgt die Auswertung über Interpolation.

Das vorstehend beschriebene Verfahren wurde bei einer Lichtwellenlänge im nahen IR-Bereich (ca.1300nm) durchgeführt. Es ist aber auch jede andere Lichtwellenlänge vom sichtbaren Spektralbereich (ca. 400 nm) bis in den fernen Infrarotbereich (ca. 14 µm) geeignet, sofern die Absorption in der Atmosphäre nicht zu große Werte annimmt.

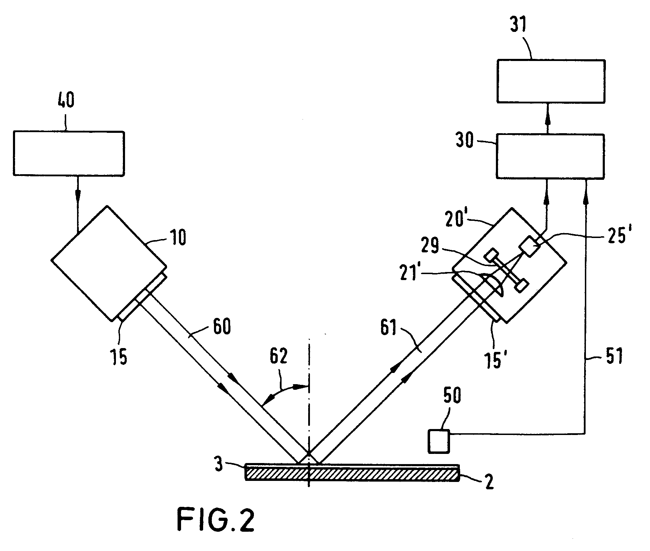

In Fig.2 ist ein weiteres Ausführungsbeispiel einer erfindungsgemäßen Reflexionsmeßvorrichtung dargestellt. Dabei wurden für gleiche Funktionsgruppen die gleichen Bezugszeichen verwendet wie in Fig.1.

Im wesentlichen unterscheiden sich die in den Fig.1 und 2 dargestellten Reflexionsmeßvorrichtungen nur dadurch, daß die Empfangsvorrichtungen einen anderen Aufbau besitzen. Im Gegensatz zur Empfangsvorrichtung 20 (Fig.1) besitzt nämlich die Empfangsvorrichtung 20' nur einen Detektor 25'. Vor diesem Detektor 25' ist ein bei der Messung rotierendes Polarisationsfilter 29 angeordnet. Das von der Wasserschicht 3 reflektierte Licht wird über ein mit 21' bezeichnetes optisches System (Linse oder Reflektor) auf den Detektor 25' fokussiert. Durch die Rotation des Polarisationsfilters 29 treten in der Lichtintensität ausgeprägte Minimal- und Maximalwerte auf. Dabei stellt das jeweilige Minimum die Lichtintensität der parallel zur Einfallsebene schwingenden Lichtwelle, das Maximum die Lichtintensität der senkrecht schwingenden Komponente dar.

Die Auswertung der Minima und Maxima erfolgt dann -zum Beispiel durch Quotientenbildung der entsprechenden Signalwerte und Vergleich mit vorher abgespeicherten Referenzwerten- mit der Auswerteelektronik 30, ähnlich wie im ersten Ausführungsbeispiel beschrieben. Bei Verwendung des in Fig.2 dargestellten Ausführungsbeispieles ist eine senderseitige Modulation des Lichtes überflüssig.

### Bezugszeichenliste

- 1: Reflexionsmeßvorrichtung
- 2: Straßenoberfläche
- 3: Wasserschicht
- 10: Strahlungsvorrichtung
- 11: Strahlungsquelle
- 12: Optik, Spiegeloptik
- 13: optisches Filter
- 14: Modulator
- 15,15': Fenster
- 20,20': Empfangsvorrichtung
- 21,21': optisches System
- 22,22': optisches System
- 23,24: Polarisationsfilter
- 24': polarisierender Strahlteiler
- 25,25': Detektoren
- 26: Detektor
- 27,28: Signalleitungen
- 29: rotierendes Polarisationsfilter
- 30: Auswerteelektronik
- 31: Signalausgabeschnittstelle
- 40: Ansteuerung
- 50: Strahlungsthermometer
- 51: Signalleitung
- 60: Licht
- 61: reflektiertes Licht
- 62: Einfallswinkel
- 70: Meßkurve: Reflexionsgrad in Abhängigkeit von der NaCl-Konzentration für parallele Polarisation
- 71: wie 43, nur für senkrechte Polarisation

## Patentansprüche

1. Verfahren zur berührungslosen Messung des Tausalzgehaltes der auf der Straßenoberfläche (2) befindlichen Wasserschicht (3) durch Reflexionsmessung elektromagnetischer Strahlung, **dadurch gekennzeichnet**, daß Licht (60) des sichtbaren oder infraroten Spektralbereichs auf den mit der zu untersuchenden Wasserschicht (3) bedeckten Bereich der Straßenoberfläche (2) gerichtet wird, und daß die Intensitäten mindestens zweier von der zu untersuchenden Wasserschicht (3) reflektierten linear polarisierten Lichtanteile gemessen und diese Meßwerte zur Ermittlung des Salzgehaltes der Wasserschicht (3) herangezogen werden.

2. Verfahren nach Anspruch 1, **dadurch gekennzeichnet,** daß Licht (60) unter einem Einfallswinkel (62) größer als 30° auf die zu untersuchende Wasserschicht (3) gerichtet wird.

3. Verfahren nach Anspruch 1 oder 2, **dadurch gekennzeichnet**, daß die Polarisationsrichtung des ersten Lichtanteiles senkrecht und die Polarisationsrichtung des zweiten Lichtanteiles parallel zur Oberfläche der zu untersuchenden Wasserschicht (3) ausgerichtet ist.

4. Verfahren nach einem der Ansprüche 1 bis 3, **dadurch gekennzeichnet**, daß das zur Messung des Tausalzgehaltes verwendete Licht (60) linear polarisiert ist, wobei die Polarisationsrichtung des Lichtes (60) so gewählt wird, daß eine senkrechte und eine parallele Polarisationskomponente, bezogen auf die Oberfläche der zu untersuchenden Wasserschicht (3), vorhanden ist.

5. Vorrichtung zur Durchführung des Verfahrens nach Anspruch 1 bis 4, **dadurch gekennzeichnet**, daß zum Empfang der unterschiedlich polarisierten Lichtanteile jeweils ein separater Detektor (25,26) mit vorgeschalteten Polarisationsfiltern (23,24) vorgesehen ist, denen eine Auswerteelektronik (30) nachgeschaltet ist.

6. Vorrichtung zur Durchführung des Verfahrens nach Anspruch 1 bis 4, **dadurch gekennzeichnet**, daß zum Empfang der unterschiedlich polarisierten Lichtanteile jeweils ein separater Detektor (25,26) vorgesehen ist, und daß die Trennung der Lichtanteile nach den beiden senkrecht aufeinanderstehenden Polarisationsrichtungen durch einen den Detektoren (25,26) vorgeschalteten polarisierenden Strahlteiler (24') erfolgt.

7. Vorrichtung zur Durchführung des Verfahrens nach Anspruch 1 bis 4, **dadurch gekennzeichnet**, daß zum Empfang der unterschiedlich polarisierten Lichtanteile nur ein einziger Detektor (25') vorgesehen ist, vor dem ein rotierendes Polarisationsfilter (29) angeordnet ist, und daß dem Detektor (25') eine Auswerteelektronik (30) nachgeschaltet ist, die zur Bestimmung des Salzgehaltes die bei der Rotation des Polarisationsfilters (29) sich ergebenden minimalen und maximalen Lichtintensitätswerte auswertet.
